# EUROPÄISCHE PATENTSCHRIFT

(11) **EP 0 542 112 B1**
(45) Veröffentlichungstag und Bekanntmachung des Hinweises auf die Patenterteilung: **10.02.1999**
(21) Anmeldenummer: 92118842.1
(22) Anmeldetag: 04.11.1992
(51) Int. Cl.: A01C 17/00

(54) **Mehrfachschalt- oder Mehrfachbedienungssystem**
Multiple switching or operating system
Système de commande ou d'opération multiple

(30) Priorität: 15.11.1991 DE 4137564
(43) Veröffentlichungstag der Anmeldung: 19.05.1993
(73) Patentinhaber: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE); Scheufler, Bernd, Dr.-Ing., W-4507 Hasbergen (DE); Bresch, Robert, W-4550 Bramsche 3 (DE)

(56) Entgegenhaltungen:
- EP-A- 0 191 374
- WO-A-88/09609
- DE-A- 3 615 818
- US-A- 2 334 376

## Beschreibung

Die Erfindung betrifft einen Zentrifugaldüngerstreuer mit einem Mehrfachbedienungssystem für die Dosierorgane gemäß des Oberbegriffes des Anspruches 1.

Durch die EP-191 374 A1 (Fig.19) wird ein derartiger Zentrifugaldüngerstreuer beschrieben. Das Mehrfachbedienungssystem für die Dosierorgane dieses Zentrifugaldüngerstreuers weist einen Verschlußschieber und einen Einstellschieber auf. Zwischen dem Verschlußschieber und dem Einstellschieber ist eine als Stellmotor ausgebildete fernbedienbare Einstelleinrichtung angeordnet. Mittels dieses Stellmotors kann der Einstellschieber gegenüber dem Verschlußschieber verstellt werden, so daß die Ausbringmenge veränderbar ist. Dem Verschlußschieber ist eine fernbedienbare Verschließeinrichtung zugeordnet, über welche der Verschlußschieber gemeinsam mit dem Einstellschieber in die Verschlußstellung und die die Auslauföffnung freigebende Stellung verstellt werden kann. In der Öffnungsstellung kommt der Verschlußschieber an einem einstellbaren Anschlag zur Anlage. Dieser Anschlag bestimmt die Grundöffnungsstellung. Wenn die zwischen dem Verschlußschieber und dem Einstellschieber angeordnete Einstelleinrichtung ausfällt, kann der Einstellschieber zur Veränderung der Ausbringmenge nicht mehr verstellt werden. Dadurch, daß die Einstelleinrichtung zwischen dem Verschlußschieber und dem Einstellschieber angeordnet ist, wird der Einstellschieber und die Einstelleinrichtung bei jedem Öffnen und Schließen der Auslauföffnung der Dosiereinrichtung gemeinsam mit dem Verschlußschieber durch die Verschließeinrichtung verstellt. Eine derartige Verstellung ist nachteilig.

Die EP-191 417 zeigt einen Zentrifugaldüngerstreuer mit einem Dosiersystem, welches einen Verschlußschieber und einen Einstellschieber aufweist. Dem Verschlußschieber ist eine Verschließeinrichtung zugeordnet. Über den zwischen dem Verschlußschieber und dem Einstellschieber angeordneten Bowdenzug kann die Ausbringmenge verstellt werden.

Durch die deutsche Offenlegungsschrift 36 15 818 ist ein Schalt- und Bedienungssystem für einen Zentrifugaldüngerstreuer bekannt. Dieser Zentrifugaldüngerstreuer weist Dosierorgane auf. Diese Dosierorgane sind jeweils als über Schieber in ihrer Öffnungsgröße einstell- und verschließbare Auslauföffnungen ausgebildet, wobei für jede Auslauföffnung zumindest zwei Schieber vorgesehen sind. Der eine Schieber ist als Verschlußschieber und der andere Schieber als Einstellschieber ausgebildet. Der Verschlußschieber wird über eine als Hydraulikzylinder fernbedienbare Verschließeinrichtung betätigt, während der Einstellschieber über eine Einstelleinrichtung ein- oder verstellbar ist. Diese Einstelleinrichtung ist als elektrischer Stellmotor ausgebildet, der über eine Steuer- oder Regeleinrichtung fernbedienbar ist. Wenn der Stellmotor oder die Steuer- und Regeleinrichtung ausfällt, kann der Stellmotor von dem Einstellschieber abgekuppelt werden. Es werden dann Verschlußschieber und Einstellschieber zusammengekuppelt. Weiterhin ist bei diesem bekannten Schleuderdüngerstreuer an der Bodenplatte eine Arretierungsvorrichtung vorgesehen, an welcher der Verschlußschieber zur Anlage kommt. Dieses Arretierungselement bestimmt die Grundöffnungsstellung der Schieber. Gegenüber dem Verschlußschieber ist der Einstellschieber über den Einstellmotor veränderbar, so daß unterschiedliche Ausbringmengen während der Fahrt eingestellt werden können. Zum Schließen der Auslauföffnung werden beide Schieber gemeinsam bewegt. Wenn bei Ausfall des Stellmotors oder der Steuer- und Regeleinrichtung der Stellmotor von dem Einstellschieber abgekuppelt wird, verändert sich die Ausbringmenge, weil der Einstellschieber gegenüber dem Verstellschieber verstellt wird. Dies muß bei der Einstellung des Arretierungselementes bei dem bekannten Schalt- und Bedienunssystem berücksichtigt werden.

Durch die PCT WO 88/09606 ist ein Zentrifugaldüngerstreuer mit weiteren Schalt- und Bedienungssystemen bekannt geworden. Die Dosierorgane dieses Zentrifugaldüngerstreuers sind jeweils als über Schieber in ihrer Öffnungsweite einstell- und verschießbare Auslauföffnungen ausgebildet. Für jede Auslauföffnung sind zumindest zwei übereinander angeordnete Schieber (ein Verschlußschieber und ein Einstellschieber) vorgesehen. Der Verschlußschieber ist über eine fernbedienbare Verschließeinrichtung, die als Hydraulikzylinder ausgebildet ist, betätigbar. Der Einstellschieber ist in der einen Ausführungsform über eine fernbedienbare Einstelleinrichtung ein- und/oder verstellbar, wobei diese Einstelleinrichtung als ein über eine Steuer- oder Regeleinrichtung fernbedienbarer Stellmotor ausgebildet ist. Wenn dieser Stellmotor ausfällt, ist es nicht mehr möglich, den Stellschieber und somit die Ausbringmenge einzustellen. Der Benutzer der Maschine kann bei Ausfall der Steuer- und Regeleinrichtung bzw. des Stellmotors seine Ausbringarbeit nicht mehr fortsetzen.

In einer anderen Ausführungsform wird gemäß der vorgenannten PCT-Anmeldung vorgeschlagen, die Einstelleinrichtung als eine von Hand betätigbare Arretierungsvorrichtung auszubilden. Bei dieser Ausführungsform wird der Einstellschieber grundsätzlich von der von Hand betätigbaren Arretierungsvorrichtung in der gewünschten Stellung festgelegt. Eine Änderung der Ausbringmenge ist hier während der Fahrt nicht möglich. Desweiteren ist bei der Maschine gemäß der vorstehend genannten PCT-Anneldung nachteilig, daß nur die eine oder die andere Schaltung eingesetzt werden kann.

Der Erfindung liegt die Aufgabe zugrunde, ausgehend von dem eingangs geschilderten Stand der Technik, ein vorteilhaft ausgebildetes Dosiersystem für einen gattungsgemäßen Zentrifugaldüngerstreuer zu schaffen.

Diese Aufgabe wird in erfindungsgemäßer Weise durch die kennzeichnenden Merkmale des Anspruches 1 gelöst.

Infolge dieser Maßnahmen ist es möglich, den Einstellschieber bei ein und derselben Maschine wahlweise mittels des Stellmotors oder von Hand mittels Einstellskala und der Arretierungsvorrichtung einzustellen. Somit ist also durch die erfindungsgemäße Lösung erstmals ein Mehrfachbedienungssystem für die Dosierorgane eines Zentrifugaldüngerstreuers in überraschend einfacher Weise geschaffen worden.

Durch die hier vorgeschlagenen Maßnahmen und Variationsmöglichkeiten der Einstellung ein und desselben Einstellschiebers bei ein und derselben Maschine ergeben sich vielfältige Vorteile. Somit ist es beispielsweise erstmalig möglich, bei der Endmontage der Bedienungselemente für die Schalt- und Bedienungssysteme für die Dosierorgane eines Zentrifugaldüngerstreuers nur mit einer manuellen Arretierungsmöglichkeit oder in einfacher Weise zusätzlich mit einer Fernbedienungsvorrichtung auszustatten. Gleichzeitig wird durch die erfindungsgemäß vorgeschlagenen Maßnahmen es möglich, auf einfache Weise auf eine Handarretierung und Handeinstellung des Einstellschiebers umzuschalten oder überzuwechseln, wenn beispielsweise beim Einsatz der Maschine an einem Schlepper, der keinen elektrischen Anschluß aufweist oder weil der Stellmotor oder die Regel- und Steuereinrichtung nicht richtig oder überhaupt nicht mehr funktioniert. Somit ist also auf einfache Weise auf Handeinstellung überzugehen. Der Bediener der Maschine kann den Stellmotor von dem Einstellschieber abkuppeln und den Einstellschieber über die Arretierungsvorrichtung anhand der vorgesehenen Skala einstellen, so daß die gewünschte Ausbringmenge ausgebracht wird. Über den Verschlußschieber läßt sich dann noch mit der Fernbedienungsvorrichtung die Auslauföffnung verschließen oder öffnen.

Gemäß der Erfindung ist vorgesehen, daß die Einstelleinrichtung für den Einstellschieber als ein über eine Steuer- oder Regeleinrichtung fernbedienbarer Stellmotor ausgebildet ist. Bei Ausfall dieser Steuer- und Regeleinrichtung kann der Stellmotor vom Einstellschieber abgekuppelt werden, wie dieses bereits vor erläutert worden ist.

Somit ergibt sich also ein vorteilhaftes Mehrfachbedienungssystem für einen Zentrifugaldüngerstreuer, der mit einem Vorratsbehälter, zumindest zwei rotierend angetriebenen und mit Wurfschaufeln besetzten Schleuderscheiben, denen jeweils über die Dosierorganer denen die sich im Vorratsbehälter befindlichen Düngermittel in einstellbarer weise zugeführt werden, ausgestattet ist. Die Dosierorgane bei diesem Zentrifugaldüngerstreuer sind als über eine Schieberanordnung in ihrer Größe einstellbare Auslauföffnungen, die sich jeweils in dem Boden oder einer Wandung des Vorratsbehälters befinden, ausgebildet. Jede Schieberanordnung weist zwei Schieber (Einstell- oder Verschlußschieber) auf. Diese Schieber können übereinander oder in gleicher Ebene, so daß sie gegeneinander arbeiten, angeordnet sein. Der Verschlußschieber wird über eine Verschließeinrichtung und der Einstellschieber über eine Einstelleinrichtung betätigt. Hierbei kann der Einstellschieber von der Einstelleinrichtung abgekuppelt werden, dieses ist beispielsweise bei Ausfall der Einstelleinrichtung oder ohne Einsatz mit einer elektrischen Steuereinrichtung vorn grundsätzlicher Bedeutung. Um dann den Einstellschieber einstellen zu können, weist der Einstellschieber ein Zeigerelement auf, welches mit einem Einstellskalenelement zusammenwirkt. Der Einstellschieber weist eine Arretierungsvorrichtung auf, mittels derer der Einstellschieber gegenüber der Auslauföffnung in seiner Dosierstellung festlegbar ist. Somit kann also wahlweise der Einstellschieber über die fernbedienbare Einstelleinrichtung oder über das Arretierungselement in seiner Dosierstellung festgelegt werden. Der Stellmotor ist an dem Einstellschieber derart befestigt, daß er sowohl abkuppelbar wie auch an den Einstellschieber ankuppelbar ist, wie es jeweils die erforderlichen Einsatzbedingungen erfordern. Wenn der Einstellschieber mittels des Stellmotors eingestellt wird, ist die Arretierungsvorrichtung gelöst oder vom Einstellschieber abgenommen.

Um auf einfache Weise eine Reparatur des Stellmotors mit seiner Regeleinrichtung zu ermöglichen, ohne daß der Zentrifugaldüngerstreuer stillgesetzt werden muß, ist vorgesehen, daß der Stellmotor an dem Zentrifugaldüngerstreuer abnehmbar angeordnet ist.

In einer besonders bevorzugten Ausführungsform ist erfindungsgemäß vorgesehen, daß die Elemente der Bedienungsanlage an der landwirtschaftlichen Maschine leicht anbringbar und leicht abnehmbar angeordnet sind.

Hierdurch ist es dann mit nur wenigen Handgriffen möglich, die Bedienungsanlage schnell und unkompliziert ab bzw. an die landwirtschaftliche Maschine zu bauen. Weiterhin wirkt sich diese Tatsache natürlich auch auf das einfache Austauschen der kompletten elektrischen/elektronischen Bedienungsanlage bei auftretenden Störungen aus, so daß auf einfachste Weise eine Austauschbedienungsanlage an der Maschine befestigt werden kann. Hierdurch werden die Stillstandszeiten der landwirtschaftlichen Maschine während der ohnehin sehr kurzen Einsatzzeit auf ein vertretbares Minimum reduziert.

Zur einfachen Handhabung beim Einrüsten der Maschine für den Arbeitseinsatz oder nach Beendigung des Arbeitseinsatzes sowie bei notwendigen Reparaturen bei Ausfall einzelner Komponenten ist in besonders bevorzugter Ausführung erfindungsgemäß vorgesehen, daß die Elemente der Bedienungsanlage zu Baugruppen zusammengefaßt sind, und daß die Baugruppen mittels eines Schnellkuppelsystems leicht abnehmbar an der Maschine angeordnet sind.

Zum Reduzieren der Rüstzeiten für den Arbeitseinsatz der landwirtschaftlichen Maschine bzw. der Abrüstzeit nach Beendigung des Arbeitseinsatzes ist erfindungsgemäß vorgesehen, daß die Bedienungsanlage zumindest einen elektrischen Stellmotor, eine Steuerungs- oder Regeleinrichtung und eine den Stellmotor und die Steuerungs- und Regeleinrichtung verbindende Kabeleinheit aufweist, daß der Stellmotor mit der Kabeleinheit und der Steuerungs- und Regeleinrichtung über ein Schnellkuppelsystem an die Maschine anbringbar und von der Maschine abnehmbar ist. Infolge dieser Maßnahme wird dem Benutzer dieser landwirtschaftlichen Maschinen mit elektrischer/elektronischer Bedienungsanlage eine einfache, aber wirkungsvolle Methode zum ordnungsgemäßen, einwandfreien Betreiben seiner landwirtschaftlichen Maschinen mit der elektrischen/elektronischen Bedienungsanlage zur Verfügung gestellt. Hierdurch wird in entscheidender Weise die Lebensdauer und Funktionsfähigkeit der elektrischen/elektronischen Bedienungsanlage für landwirtschaftliche Maschinen in einfacher Weise entscheidend verbessert.

Um die als elektrische/elektronische Bedienungsanlage ausgebildete Einstellvorrichtung in funktionsfähigem Zustand zuhalten ist erfindungsgemäß vorgesehen, daß die Bedienungsanlage für den Arbeitseinsatz an die landwirtschaftliche Maschine angeordnet und nach Beendigung des Arbeitseinsatzes von der Maschine abgenommen und in einem trockenen Raum gelagert wird.

Infolge dieser erfindungsgemäßen Maßnahme wird die Funktionsfähigkeit der elektrischen/elektronischen Bedienungsanlage der landwirtschaftlichen Arbeitsmaschinen gewährleistet. Die Bauteile der elektrischen/elektronischen Bedienungsanlage sind für den rauhen Einsatz in der Landwirtschaft entwickelt, jedoch handelt es sich bei den landwirtschaftlichen Arbeitsmaschinen im wesentlichen um Maschinen zum Ausbringen landwirtschaftlicher Güter, Bodenbearbeitungsgeräte oder Erntemaschinen, die nur während einer kurzen Arbeitsperiode eingesetzt werden. D.h., je nach Saison ist die Einsatzzeit dieser Maschinen sehr gering, während sie in der übrigen Zeit nicht genutzt werden und dann irgendwo auf dem landwirtschaftlichen Betrieb abgestellt werden. Hierbei ist es dann nicht immer gewährleistet, daß die Maschinen in trockenen Räumen abgestellt werden, im Gegenteil, vielfach können die Maschinen nicht so trocken gelagert werden, wie es für die elektrische/elektronische Bedienungsanlage wünschenswert wäre. Die Maschinen, einschließlich ihrer elektrischen/elektronischen Bedienungsanlage sind dann den Wettereinflüssen ausgesetzt, im ungünstigsten Fall werden sie draußen gelagert, wodurch sie dann den Wertereinflüssen, wie Regen, Sonne, Wind und Schnee, sprich Feuchtigkeit, ausgesetzt sind.

Bei längeren Arbeitspausen (über Wochen und Monate) dieser landwirtschaftlichen Maschinen nehmen die elektrischen/elektronischen Bedienungsanlagen großen Schaden, der im ungünstigsten Fall bis zum Totalausfall führen kann. All diese ungünstigen Bedingungen während der Stillstandszeiten dieser landwirtschaftlichen Maschinen mit elektrischen/elektronischen Bedienungsanlagen werden durch die erfindungsgemäße Maßnahme völlig ausgeschaltet.

Eine einfache Betätigung des Einstellschiebers ergibt sich dadurch, daß unterhalb der beiden Schieber an dem gleichen Bolzen, an welchem die Schieber schwenkbar gelagert sind, ein doppelarmiger Betätigungshebel gelagert ist, daß dieser Betätigungshebel auf seiner einen Seite mit dem Einstellschieber und auf der anderen Seite mit der Einstelleinrichtung lösbar verbunden ist. Hierdurch kann bei Ausfall des Stellmotors oder seiner Steuer- und Regeleinrichtung durch einfaches Lösen des Betätigungshebels von dem Einstellschieber die Betätigung der fernbedienbaren Einstellvorrichtung für den Einstellschieber von dem Einstellschieber gelöst werden, so daß der Einstellschieber dann von Hand mittels der Arretierungsvorrichtung und der Skala in seiner Position eingestellt und festgelegt werden kann.

Um mit einfachen Mitteln eine universelle Ausgestaltung der Dosierorgane zu erreichen, ist vorgesehen, daß der Betätigungshebel abnehmbar auf dem Bolzen angeordnet ist, und daß nach Abnahme des Betätigungshebels ein Füllstück auf dem Bolzen angeordnet ist. Durch diese Maßnahme kann sehr einfach der Stellmotor und der Betätigungshebel von dem Dosierorgan abgenommen werden. Ein einwandfreie Funktion wird dadurch gewährleistet, daß das Füllstück auf dem Bolzen angeordnet ist. Andererseits ist es durch diese Maßnahme ganz einfach möglich, die Maschine zunächst ohne den Stellmotor für den Einstellschieber auszurüsten, so daß dann auf Wunsch des Bedieners später, wenn der Einstellschieber von einem Stellmotor während der Fahrt eingestellt und verstellt werden soll, anstelle des Füllststückes der Betätigungshebel auf dem Bolzen angeordnet werden kann. Der Betätigungshebel muß dann nur mit dem Einstellschieber verbunden werden.

Weiterhin ist vorteilhaft, wenn die Steuer- oder Regeleinrichtung für den Stellmotor so ausgelegt ist, daß es möglich ist, über den Stellmotor den Einstellschieber soweit so verstellen, daß mittels des Einstellschiebers die Auslauföffnung verschlossen werden kann. Somit kann also acuh nur mit dem Einstellschieber zusätzlich zu der Einstellung der Öffnungsgröße der Auslauföffnung und somit der Einstellung der Ausbringmenge auch die Ausbringung des Materials durch Verschließen der Auslauföffnung unterbrochen werden. Diese Möglichkeit ist vorteilhaft, wenn beispielsweise die Verschließeinrichtung für den Verschlußschieber ausfällt. Es muß nur Sorge dafür getragen werden, daß der Verschlußschieber in die Öffnungsstellung gebracht wird, so daß der Verschlußschieber die Auslauföffnung nicht verdeckt.

Weitere Einzelheiten der Erfindung sind den übrigen Unteransprüchen, der Beispielsbeschreibung und den Zeichnungen zu entnehmen. Hierbei zeigen
- Fig. 1: den Zentrifugaldüngerstreuer in Rückansicht und in Prinzipdarstellung,
- Fig. 2: den Zentrifugaldüngerstreuer in der Draufsicht, in Teilansicht und in vergrößertem Maßstab,
- Fig. 3: das linke Dosierorgan des Düngerstreuers gemäß Fig. 2 in vergrößertem Maßstab,
- Fig. 4: ein weiteres Dosierorgan in der Draufsicht, wobei durch den Verschlußschieber die Auslauföffnung verschlossen ist und
- Fig. 5: das Dosierorgan gemäß Fig. 4, wobei durch den Verschlußschieber der eingestellte Auslaufquerschnitt der Auslauföffnung freigegeben ist.

Der Zentrifugaldüngerstreuer weist den Vorratsbehälter 1 und den Rahmen 2 auf. Der Vorratsbehälter 1 ist durch das dachförmige Mittelteil 3 in die beiden Auslauftrichter 4 und 5 aufgeteilt. Jeder Auslauftrichter 4,5 weist an seiner Unterseite die Bodenplatte 6 mit der Auslauföffnung 7 auf. Unterhalb der Bodenplatte 6 befinden sich die beiden Schieber 8 und 9. Der eine der beiden Schieber, der Verschlußschieber 8 ist direkt unterhalb der Bodenplatte 6 angeordnet, während der zweite der beiden Schieber, der Einstellschieber 9 unterhalb des Verschlußschiebers 8 angeordnet ist, so daß der Verschlußschieber 8 sich zwischen der Bodenplatte 6 und dem Einstellschieber 9 befindet. Die Bodenplatte 6 mit der Auslauföffnung 7 und den beiden Schiebern 8 und 9 bildet jeweils ein Dosierorgan 10. Über das Dosierorgan 10 wird jeweils den unterhalb der Auslauftrichter 4 und 5 angeordneten Schleuderscheiben 11 die sich im Vorratsbehälter 1 befindlichen Düngemittel zugeführt. Die Schleuderscheiben 11 weisen die Wurfschaufeln 12, die in Scheibenebene winkelverschwenkbar ausgebildet sein können, auf. Die Schleuderscheiben 12 sind auf den Schleuderscheibenantriebswellen 13 angeordnet und werden über einen nicht dargestellten Antrieb in bekannter Weise in einander entgegengesetztem Drehsinn angetrieben.

Die Betätigungsorgane für die Dosierorgane 10 sind als Mehrfachschalt- oder Mehrfachbedienungssystem ausgebildet. Der Einstellschieber 9 und der Verschlußschieber 8 sind an dem Bolzen 14, der an der Bodenplatte 6 angeordnet ist, drehbar gelagert. Der Verschlußschieber 8 weist den Beätigungsarm 15 auf. Zwischen der Bodenplatte 6 und dem Betätigungsarm 15 des Verschlußschiebers 8 ist die fernbedienbare Verschließeinrichtung 16, die den einfach wirkenden Hydraulikzylinder 17 und die Zugfeder 18 aufweist und den Verschlußschieber 8 betätigt, angeordnet. Über den Hydraulikschlauch 19 ist der Hydraulikzylinder 17 mit der Hydraulikanlage des den Zentrifugaldüngerstreuer tragenden Schleppers verbunden.

Der Einstellschieber 9 weist die Fernbedienungseinrichtung 20 auf. Diese Fernbedienungseinrichtung 20 weist zunächst den Stellmotor 21 auf. Der Stellmotor 21 ist mit dem doppelarmigen Betätigungshebel 22 verbunden. Der Betätigungshebel 22 ist ebenfalls auf dem Bolzen 14, auf dem die Schieber 8 schwenkbar angeordnet sind, gelagert. Der Betätigungshebel 22 ist auf seiner einen Seite 23 mit dem Stellmotor 21 verbunden. Auf seiner anderen Seite 24 ist der Betätigungshebel 22 über den Bolzen 25, der beispielsweise als Schraubbolzen ausgebildet sein kann, mit dem Einstellschieber 9 lösbar verbunden. Weiterhin weist der Einstellschieber 9 die Rolllen auf 26, die auf der Oberseite der Bodenplatte 6 an dessen kreisförmigen Rand laufen, so daß der Einstellschieber 9 sicher unter der Bodenplatte 6 anliegt. Weiterhin weist der Einstellschieber 9 den Zeiger 27 auf, der mit einem an dem Vorratsbehälter 1 angebrachten Einstellskalenelement 28 zusammenwirkt.

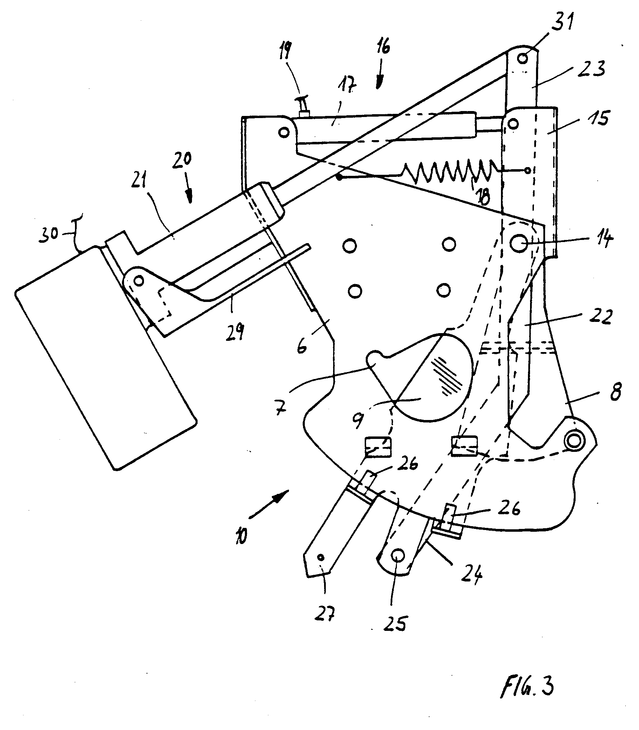

Der Verschlußschieber 8 ist gegenüber dem Einstellschieber 9 derart angeordnet, daß er unabhängig vom Einstellschieber 9 in seine Öffnungsstellung, die in Fig. 3 dargestellt ist, und in seine Schließstellung verstellbar ist. Der elektrische Stellmotor 21 ist über den Haltearm 29 zwischen dem Einstellschieber 9 und der Bodenplatte 6 angeordnet.

Über das Kabel 30 ist der Stellmotor 21 mit der auf dem Schlepper anzuordnenden Steuer- und Regeleinrichtung 49 verbunden, so daß der Stellmotor 21 über die Steuer- und Regeleinrichtung fernbedienbar ist. Über die Steuer- und Regeleinrichtung 49 und den Stellmotor 21 kann der Einstellschieber 9 betätigt werden, so daß die Öffnungsweite der Auslauföffnung 7 über den Einstollschieber 9 und somit die Ausbringmenge einzustellen ist.

Bei Ausfall des Stellmotors 21 oder der Steuer- und Regeleinrichtung 49 kann durch Lösen der Schraube 25 der Einstellschieber 9 von dem Stellmotor 21 abgekuppelt werden. Es ist auch möglich, den Bolzen 31, mittels dem der Stellmotor 21 mit dem Hebel 23 verbunden, ist zu lösen. Weiterhin kann durch Lösen des Bolzens 31 der Stellmotor 21 mit der gesamten Steuer- und Regeleinrichtung von dem Dosierorgan 10 abgenommen werden.

Hierdurch ist die aus den Baugruppen Stellmotor 21, Kabeleinheit 30 und Steuer- und Regeleinrichtung 49 bestehende elektrische/elektronische Bedienungsanlage 50 mittels des als Bolzen 31 ausgebildeten Schnellkuppelsystems einfach für den Arbeitseinsatz an die landwirtschaftliche Maschine zu befestigen bzw. nach Beendigung des Arbeitseinsatzes von der Maschine abzunehmen. Die elektrische/elektronische Bedienungsanlage 50 der Maschine ist soweit komplett zu Reparaturzwecken abnehmbar und/oder gegen eine Austauschbedienungsanlage auszuwechseln oder außerhalb der Maschinensaison in einem trocknen Raum zu lagern, so daß die Bedienungsanlage 50 bei saisonbedingten Maschinenstillstandszeiten keinen Witterungseinflüssen ausgesetzt ist und die Funktionsfähigkeit somit auch nach längeren Betriebspausen gewährleistet ist. Die Kabeleinheit 30 ist ebenfalls mit einem nicht näher dargestellten Schnellkuppelsystem an der Maschine befestigt.

Wenn der Einstellschieber 9 von dem Stellmotor 21 gelöst bzw. von dem Betätigungshebel 23 gelöst ist, so kann der Einstellschieber 23 über den Zeiger 27 anhand des Einstellskalenelementes 28 in seiner Öffnungsweite eingestellt werden. Zusätzlich ist dann eine Arretierungsvorrichtung 32 an dem Zeiger 27 angeordnet, mittels dessen der Einstellschieber 9 mittels der Arretierungsvorrichtung 32 von Hand eingestellt und in seiner Stellung arretiert wird. Durch Öffnen und Schließen der Auslauföffnung 7 über den Verschlußschieber 9 mittels der Verschließeinrichtung 16, die als Hydraulikzylinder 17 ausgebildet ist, läßt sich die Auslauföffnung 7 öffnen und schließen. Durch dieses so geschaffene Mehrfachschalt- oder Mehrfachbedienungssystem kann der Landwirt seine Maschine bzgl. der Mengenreduzierung und halbseitigem Streuen über die elektronisch ausgebildete Steuer- und Regeleinrichtung und den Stellmotor 21 vom Schleppersitz aus regeln. Bei Ausfall dieser elektronischen Steuer- und Regeleinrichtung oder Stellmotors 21 kann er von Hand mittels der Arretierungseinrichtung 32 anhand der Einstellskala 28, wenn der Stellmotor 21 vom Einstellschieber 9 abgekuppelt ist, auch von Hand einstellen. Somit kann also auf einfachste Weise bei Ausfall des Stellmotors oder bei der Steuer- und Regeleinrichtung der Einstellschieber 9 von Hand für jede Öffnungsweite eingestellt werden.

Zur Reparatur kann dann der Stellmotor 21 mit der elektronischen Steuer- und Regeleinrichtung 49 von der Maschine leicht abgenommen und zur Reparatur gegeben werden. Trotzdem kann dann der Landwirt das Düngerausbringen mit seiner Maschine weiter fortsetzen.

Weiterhin ist es möglich, die Maschine zunächst ohne Stellmotor 21 und Betätigungshebel 22 auszuliefern. Hierzu muß dann anstelle des Betätigungshebels 22 auf dem Bolzen 14 ein Füllstück angeordnet werden. Wenn der Landwirt dann seine Maschine später nachrüsten will, muß dann nur anstelle des Füllstückes der Betätigungshebel 22 und der Stellmotor 21 mit der Steuer- oder Regeleinrichtung nachgerüstet sowie der Betätigungshebel 22 mit dem Einstellschieber 9 verbunden und die Arretierungseinrichtung 32 für den Einstellschieber 9 gelöst oder abgenommen werden.

Weiterhin ist die Möglichkeit gegeben, wenn die Steuer- und Regeleinrichtung entsprechend ausgelegt ist, mit dem Einstellschieber 9 auch die Auslauföffnung 7 zur Ausbringunterbrechung zu schließen. Diese zusätzliche Möglichkeit ist von Vorteil, falls einmal die Verschließeinrichtung 16 ausfallen sollte, so daß der Verschlußschieber 8 nicht betätigt werden kann. Wenn eine Betätigung des Verschlußschieber 8 nicht möglich ist und trotzdem der Benutzer den Düngerstreuer weiter benutzen will, so daß ist dieses einfach möglich. Es ist lediglich erforderlich, den Verschlußschieber 8 in die in Fig. 3 dargestellte Öffnungsposition zubringen.

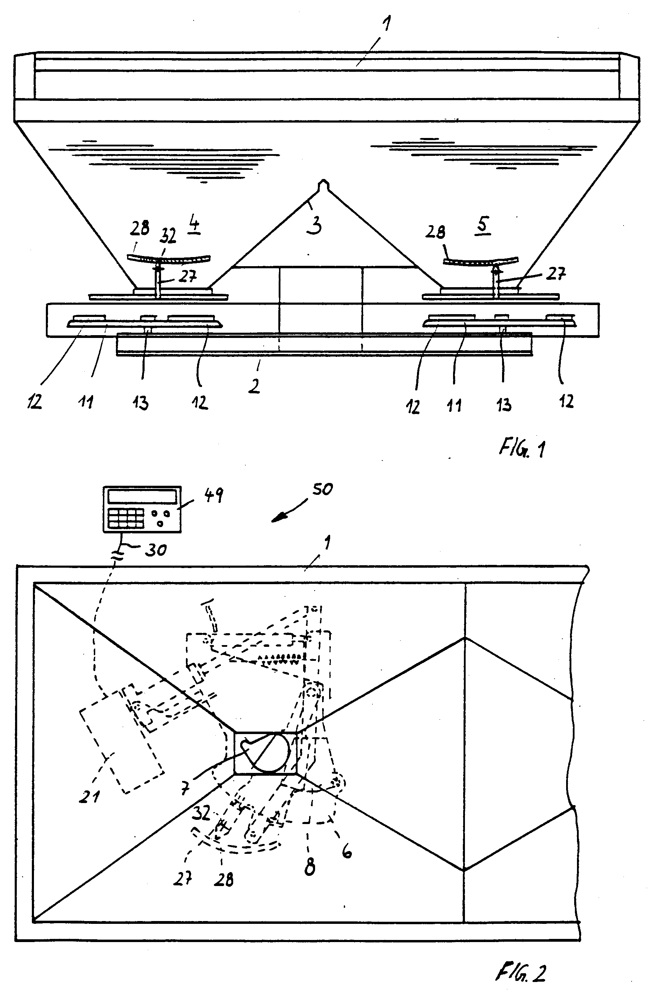

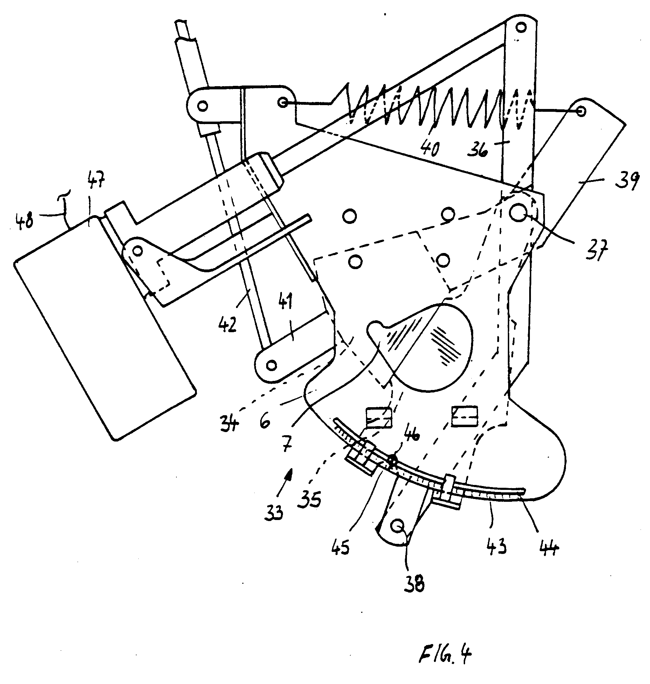

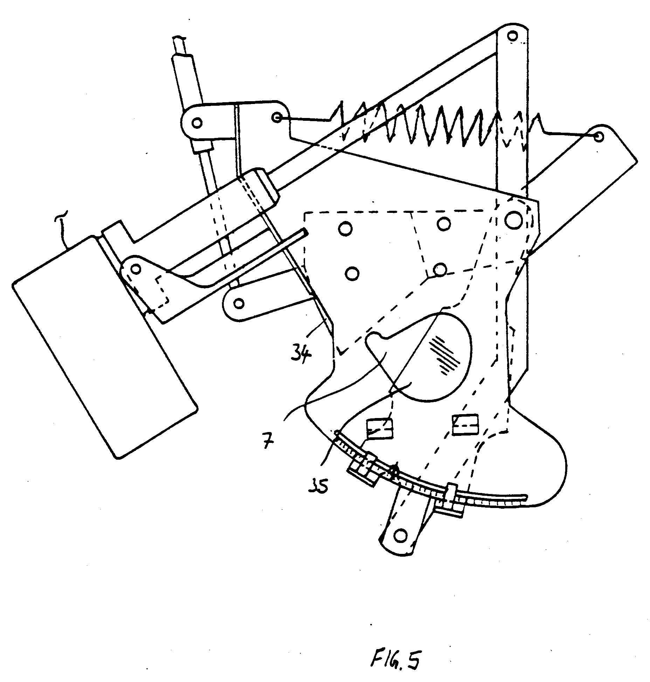

Das Ausführungsbeispiels gemäß den Fig. 4 und 5 zeigt ein weiteres Dosierorgan 33. Dieses Dosierorgan 33 weist wiederum eine Bodenplatte 6 mit einer Auslauföffnung 7 auf. Diese Bodenplatte 6 ist an dem Vorratsbehälter 1 gemäß des Düngerstreuer nach Fig. 1 anzubringen. Die Bodenplatte 6 mit der Auslauföffnung 7 sowie den beiden in einer Ebene angeordneten Schiebern 34 und 35 bilden das Dosierorgan 33. Der eine Schieber ist der Einstellschieber 35 während der andere Schieber die Funktion des Verschlußschiebers 34 übernimmt. Der Einstellschieber 35 und der Verschlußschieber 34 sind in einer Ebene unmittelbar unterhalb der Bodenplatte 6 angeordnet: Über den Einstellschieber 35 wird die Öffnungsgröße der Auslauföffnung 7 eingestellt. Der Einstellschieber 35 ist über den Betätigungshebel 36, der auf dem Schwenkbolzen 37, auf dem auch die beiden Schieber 34 und 35 schwenkbar gelagert sind, angeordnet ist, mit dem Einstellschieber 35 verbunden. Hierzu ist der Betätigungshebel 36 und der Einstellschieber 35 mittels des lösbaren Elementes, das beispielsweise als Schraubbolzen 38 ausgebildet ist, verbunden. Der Verschlußschieber 34 ist über den Betätigungsarm 39 mit der Zugfeder 40 verbunden. Die Zugfeder 40 versucht den Schieber 34 gegen den Einstellschieber 35 zu ziehen. Weiterhin weist der Verschlußschieber 34 den Hebel 41 auf, der mit dem Bowdenzug 42 verbunden ist. Über den Bowdenzug 42 kann der Verschlußschieber 34 in seine Öffnungsstellung wie in Fig. 5 dargestellt, gegen die Kraft der Zugfeder 40 gezogen werden. Der Betätigungshebel des Bowdenzuges 42 ist auf dem Schlepper, der den Zentrifugaldüngerstreuer trägt, angeordnet, so daß vom Schleppersitz aus der Verschlußschieber 34 in seine Öffnungsstellung, wie in Fig. 5 gezeigt, oder in seiner Verschlußstellung, wie in Fig. 4 gezeigt, gebracht werden kann.

An der Bodenplatte 6 ist das Einstellskalenelement 43 angeordnet. Weiterhin ist im Bereich des Einstellskalenelementes 43 das Langloch 44 angeordnet, in welches ein an dem Einstellschieber 35 angebrachter Schraubbolzen 45 faßt. Auf diesem Schraubbolzen 45 ist die Knebelschraube 46 angeordnet. Die Knebelschraube 46 bildet zusammen mit dem Schraubbolzen 45 und dem in der Bodenplatte 6 angebrachten Langloch 44 das Arretierungselement. Wenn der Einstellschieber 35 über den Einstellmotor 47, der über das Kabel 48 mit einer elektronischen Steuer- und Regeleinrichtung verbunden ist, eingestellt und verstellt wird, ist das Arretierungselement gelöst. Bei Ausfall des Stellmotors oder dem Einsatz ohne Stellmotor 47 wird die Ausbringmenge anhand der Einstellskala 43 eingestellt und der Einstellschieber 35 in seiner eingestellten Position mittels des Arretierungselementes fixiert.

## Patentansprüche

1. Zentrifugaldüngerstreuer mit einem Mehrfachbedienungssystem für die Dosierorgane (10,33), einem Vorratsbehälter (1), zumindest zwei rotierend, angetriebenen und mit Wurfschaufeln (12) besetzten Schleuderscheiben (11), denen jeweils über die Dosierorgane (10,33) die sich im Vorratsbehälter (1) befindlichen Düngemittel in einstellbarer Weise zugeführt werden, wobei die Dosierorgane (10,33) jeweils als über eine Schieberanordnung in ihrer Größe einstellbare Auslauföffnungen (7), die sich jeweils in dem Boden oder einer Wandung des Vorratsbehälters (1) befinden, ausgebildet sind, wobei jede Schieberanordnung einen Einstell- und einen Verschlußschieber, von denen der Verschlußschieber die Auslauföffnung frei gibt und verschließt und der Einstellschieber die Öffnungsweite der Auslauföffnung bestimmt, wobei der Verschlußschieber (8,34) über eine fernbedienbare Verschließeinrichtung (16,42) betätigbar ist und der Einstellschieber (9,35) über eine als Stellmotor (21,47) ausgebildete fernbedienbare Einstelleinrichtung (21,32,45,46,47) ein- und/oder verstellbar ist, aufweist, dadurch gekennzeichnet, daß der Verschlußschieber (8,34) gegenüber dem Einstellschieber (9,35) derart angeordnet ist, daß er unabhängig vom Einstellschieber (9,35) in seine Öffnungs- und seine Schließstellung verstellbar ist, daß der elektrische Stellmotor (21,47) zwischen dem Einstellschieber (9,35) und dem Rahmen oder dem Vorratsbehälter (1) angeordnet ist, daß der Einstellschieber (9,35) von der Einstelleinrichtung (21,47) abkuppelbar ist, insbesondere bei Ausfall der Einstelleinrichtung oder ohne Einsatz mit einer elektrischen Steuereinheit, wobei der Einstellschieber (9,35) ein Zeigerelement (27) aufweist, welches mit einem Einstellskalenelement (28,43) zusammenwirkt, und wobei der Einstellschieber (9,35) eine Arretierungvorrichtung (32,45,46) aufweist, mittels derer der Einstellschieber (9,35) gegenüber der Auslauföffnung (7) in seiner Dosierstellung festlegbar ist.

2. Zentrifugaldüngerstreuer nach Anspruch 1, dadurch gekennzeichnet, daß die Schieber (8,9) übereinander angeordnet sind.

3. Zentrifugaldüngerstreuer nach einem oder mehreren der vorstehenden Ansprüche, dadurch gekennzeichnet, daß die Einstelleinrichtung als ein über eine Steuer- oder Regeleinrichtung (49) fernbedienbarer Stellmotor (21,47) ausgebildet ist.

4. Zentrifugaldüngerstreuer nach einem oder mehreren der vorstehenden Ansprüche, dadurch gekennzeichnet, daß der Stellmotor (21,47) von dem Einstellschieber (9,35) sowohl abkuppelbar wie auch an den Einstellschieber (9,35) ankuppelbar ist.

5. Zentrifugaldüngerstreuer nach einem oder mehreren der vorstehenden Ansprüche, dadurch gekennzeichnet, daß der Stellmotor (21,47) an dem Zentrifugaldüngerstreuer annehmbar angeordnet ist.

6. Zentrifugaldüngerstreuer nach einem oder mehreren der vorstehenden Ansprüche, dadurch gekennzeichnet, daß die Elemente der Einstelleinrichtung (21,30,32,47) an der landwirtschaftliche Maschine leicht anbringbar und leicht annehmbar angeordnet sind.

7. Zentrifugaldüngerstreuer nach einem oder mehreren der vorstehenden Ansprüche, dadurch gekennzeichnet, daß die Elemente der Einstelleinrichtung (21,30,32,47) zu Baugruppen zusammengefaßt sind, daß die Baugruppen mittels eines Schnellkuppelsystems (31) leicht annehmbar an der Maschine angeordnet sind.

8. Zentrifugaldüngerstreuer nach einem oder mehreren der vorstehenden Ansprüche, dadurch gekennzeichnet, daß die Elemente der Einstelleinrichtung (21,30,32,47) als Bedienungsanlage (50) ausgebildet und für den Arbeitseinsatz an die landwirtschaftliche Maschine angeordnet und nach Beendigung des Arbeitseinsatzes von der Maschine abgenommen und in einem trockenen Raum gelagert wird.

9. Zentrifugaldüngerstreuer nach einem oder mehreren der vorstehenden Ansprüche, dadurch gekennzeichnet, daß die Einstelleinrichtung zumindest einen elektrischen Stellmotor (21,47), eine Steuerungsoder Regeleinrichtung (49) und eine den Stellmotor (21,47) und die Steuerungs- und Regeleinrichtung (49) verbindende Kabeleinheit (30,48) aufweist, daß der Stellmotor (21,47) mit der Kabeleinheit (30,48) und der Steuerungs- und Regeleinrichtung (49) über ein Schnellkuppelsystem an die Maschine anbringbar und von der Maschine abnehmbar ist.

10. Zentrifugaldüngerstreuer nach einem oder mehreren der vorstehenden Ansprüche, dadurch gekennzeichnet, daß unterhalb der beiden Schieber (8,9) an dem gleichen Bolzen (14), an welchem die Schieber (8,9) schwenkbar gelagert sind, ein doppelarmiger Betätigungshebel (22) gelagert ist, daß dieser Betätigungshebel (22) auf seiner einen Seite mit dem Einstellschieber (9) und auf seiner anderen Seite mit der Einstelleinrichtung (21) lösbar verbunden ist.

11. Zentrifugaldüngerstreuer nach einem oder mehreren der vorstehenden Ansprüche, dadurch gekennzeichnet, daß die Verschließeinrichtung als elektrischer Stellmotor oder hydraulischer Stellzylinder (17) und die Einstellrichtung als elektrischer Stellmotor (21) ausgebildet ist.

12. Zentrifugaldüngerstreuer nach einem oder mehreren der vorstehenden Ansprüche, dadurch gekennzeichnet, daß der Stellmotor (21,47) mit einer elektronischen Regeleinrichtung (49) zusammenwirkt.

13. Zentrifugaldüngerstreuer nach einem oder mehreren der vorstehenden Ansprüche, dadurch gekennzeichnet, daß der Betätigungshebel (22) abnehmbar auf dem Bolzen (14) angeordnet ist, und daß nach Abnahme des Betätigungshebels (22) ein Füllstück auf dem Bolzen (14) angeordnet ist.

## Claims

1. Centrifugal fertilizer spreader, including a multiple operating system for the metering members (10, 33), a hopper (1), at least two rotatably driven centrifugal discs (11), which are provided with throwing vanes (12), the fertilizers situated in the hopper being supplied in an adjustable manner to each respective disc via the metering members (10, 33), the metering members (10, 33) each being configured as outlet apertures (7), which are adjustable in respect of their size via a slide arrangement and are each situated in the base or a wall of the respective hopper, each slide arrangement having an adjusting slide and a closing slide, of which arrangement the closing slide exposes and closes the outlet aperture, and the adjusting slide determines the width of opening of the outlet aperture, the closing slide (8, 34) being actuatable via a remote-controlled closing means (16, 42), and the adjusting slide (9, 35) being adjustable and/or displaceable via a remote-controlled adjusting means (21, 32, 45, 46, 47), which is configured as setting motor (21, 47), characterised in that the closing slide (8, 34) is disposed relative to the adjusting slide (9, 35) in such a manner that it is displaceable into its open and closed positions independently of the adjusting slide (9, 35), in that the electric setting motor (21, 47) is disposed between the adjusting slide (9, 35) and the frame or the hopper (1), in that the adjusting slide (9, 35) can be disconnected from the adjusting means (21, 47), more especially in the event of a failure of the adjusting means or when not using an electric control unit, the adjusting slide (9, 35) having an indicator (27), which co-operates with a graduated scale (28, 43), and the adjusting slide (9, 35) having a locking device (32, 45, 46), by means of which the adjusting slide (9, 35) is securable in its metering position opposite the outlet aperture (7).

2. Centrifugal fertilizer spreader according to claim 1, characterised in that the slides (8, 9) are disposed one above the other.

3. Centrifugal fertilizer spreader according to one or several of the above claims, characterised in that the adjusting means is configured as a setting motor (21, 47) which can be remotely controlled via a controlling or regulating means (49).

4. Centrifugal fertilizer spreader according to one or several of the above claims, characterised in that the setting motor (21, 47) can be both disconnected from the adjusting slide (9, 35) and connected to the adjusting slide (9, 35).

5. Centrifugal fertilizer spreader according to one or several of the above claims, characterised in that the setting motor (21, 47) is disposed so as to be detachable on the centrifugal fertilizer spreader.

6. Centrifugal fertilizer spreader according to one or several of the above claims, characterised in that the elements of the adjusting means (21, 30, 32, 47) are disposed so as to be easily attachable to the agricultural machine and easily detachable from it.

7. Centrifugal fertilizer spreader according to one or several of the above claims, characterised in that the elements of the adjusting means (21, 30, 32, 47) are combined in modules, in that the modules are disposed so as to be easily detachable on the machine through the intermediary of a quick-coupling system (31).

8. Centrifugal fertilizer spreader according to one or several of the above claims, characterised in that the elements of the adjusting means (21, 30 32, 47) are configured as operating system (50) and is disposed on the agricultural machine for use and once the work is finished is detached from the machine and is stored in a dry room.

9. Centrifugal fertilizer spreader according to one or several of the above claims, characterised in that the adjusting means has at least one electric setting motor (21, 47), a controlling or regulating means (49) and a cable unit (30, 48) connecting the controlling and regulating means (49), in that the setting motor (21, 47) with the cable unit (30, 48) and the controlling or regulating means (49) can be attached to the machine and detached from the machine via a quick-coupling system.

10. Centrifugal fertilizer spreader according to one or several of the above claims, characterised in that below the two slides (8, 9) on the same pin (14) on which the slides (8, 9) are pivotably mounted, a double-armed actuating lever (22) is mounted, in that this actuating lever (22) is detachably connected on its one side to the adjusting slide (9) and on its other side to the adjusting means (21).

11. Centrifugal fertilizer spreader according to one or several of the above claims, characterised in that the closing means is configured as electric setting motor or hydraulic operating cylinder (17) and the adjusting means as electric setting motor (21).

12. Centrifugal fertilizer spreader according to one or several of the above claims, characterised in that the setting motor (21, 47) co-operates with an electronic regulating means (49).

13. Centrifugal fertilizer spreader according to one or several of the above claims, characterised in that the actuating lever (22) is configured so as to be detachable on the pin (14) and in that when the actuating lever (22) is removed a packing block is disposed on the pin (14).

## Revendications

1. Epandeur centrifuge d'engrais comportant :
- un système de commande multiple des organes de dosage (10, 33),
- un réservoir d'alimentation (1),
- au moins deux disques d'épandage (11), rotatifs, entraînés et équipés de palettes d'éjection (12), et recevant de manière réglable par l'intermédiaire des organes de dosage (10, 33), l'engrais contenu dans le réservoir (1), les organes de dosage (10, 33) comprenant des orifices de sortie (7) de dimension réglable respectivement par un dispositif à tiroirs, ces orifices étant réalisés dans le fond ou dans une paroi du réservoir d'alimentation (1), et chaque dispositif à tiroirs comprend un tiroir de réglage et un tiroir de fermeture, le tiroir de fermeture libérant ou fermant l'orifice de sortie et le tiroir de réglage définissant le degré d'ouverture de l'orifice de sortie, le tiroir de fermeture (8, 34) étant actionné par une installation de fermeture (16, 42) télécommandée et le tiroir de réglage (9, 35) étant réglable et/ou commandé par une installation de réglage (21, 32, 45, 46, 47) télécommandée, réalisée sous la forme d'un moteur d'actionnement (21, 47), le tiroir de fermeture (8, 34) étant monté par rapport au tiroir de réglage (9, 35) pour qu'indépendamment du tiroir de réglage (9, 35), il puisse être mis en position d'ouverture et en position de fermeture, le moteur électrique (21, 47) étant monté entre le tiroir de réglage (9, 35) et le châssis ou le réservoir d'alimentation (1), le tiroir de réglage (9, 35) pouvant être découplé de l'installation de réglage (21, 47) notamment en cas de défaillance de l'installation de réglage ou dans le cas d'une utilisation sans unité de commande électrique, le tiroir de réglage (9, 35) comportant un élément formant index (27) coopérant avec un élément d'échelle de réglage (28, 43) et le tiroir de réglage (9, 35) comporte un dispositif de blocage (32, 45, 46) par lequel le tiroir de réglage (9, 35) peut se bloquer dans sa position de dosage par rapport à l'orifice de sortie (7).

2. Epandeur centrifuge d'engrais selon la revendication 1,
caractérisé en ce que
les tiroirs (8, 9) sont disposés l'un au-dessus de l'autre.

3. Epandeur centrifuge d'engrais selon l'une ou plusieurs des revendications,
caractérisé en ce que
l'installation de réglage est un moteur d'actionnement (21, 47) télécommandé par une installation de commande ou de réglage (49).

4. Epandeur centrifuge d'engrais selon l'une ou plusieurs des revendications,
caractérisé en ce que
le moteur d'actionnement (21, 47) peut être découplé du tiroir de réglage (9, 35) ou être couplé sur le tiroir de réglage (9, 35).

5. Epandeur centrifuge d'engrais selon l'une ou plusieurs des revendications,
caractérisé en ce que
le moteur d'actionnement (21, 47) est monté amovible sur l'épandeur centrifuge d'engrais.

6. Epandeur centrifuge d'engrais selon l'une ou plusieurs des revendications,
caractérisé en ce que
les éléments de l'installation de réglage (21, 30, 32, 47) peuvent facilement se monter sur la machine agricole ou en être enlevés facilement.

7. Epandeur centrifuge d'engrais selon l'une quelconque ou plusieurs des revendications,
caractérisé en ce que
les éléments de l'installation de réglage (21, 30, 32, 47) sont réunis dans un ensemble de construction et ces ensembles sont montés de manière facilement amovible sur la machine à l'aide d'un système de fixation rapide (31).

8. Epandeur centrifuge d'engrais selon l'une quelconque ou plusieurs des revendications,
caractérisé en ce que
les éléments de l'installation de réglage (21,30, 32, 47) sont réalisés sous la forme d'une installation de manoeuvre (50) et sont montés sur la machine agricole, pour effectuer un travail, à la fin de cette intervention, il se monte de la machine pour être stocké dans un endroit sec.

9. Epandeur centrifuge d'engrais selon l'une quelconque des revendications,
caractérisé en ce que
l'installation de réglage comprend au moins un moteur électrique d'actionnement (21, 47), une installation de commande ou de réglage (49) et un élément de câble (30, 48) reliant le moteur d'actionnement (21, 47) et l'installation de commande et de réglage
le moteur d'actionnement (21, 47) avec l'élément de câble (30 48) et l'installation de commande et de réglage (49) se montant sur la machine à l'aide d'un système de liaison rapide et pouvant être enlevé de la machine par ce système liaison rapide.

10. Installation de réglage selon quelconque des revendications,
caractérisée en ce qu'
en dessous des deux tiroirs (8, 9), le même goujon (14) qui reçoit de manière pivotante les tiroirs (8, 9), porte un levier d'actionnement (22) à deux bras et ce levier d'actionnement (22) est relié de manière amovible d'un côté au tiroir de réglage (9) et de l'autre côté à l'installation de réglage (21).

11. Installation de réglage selon l'une quelconque des revendications,
caractérisée en ce que
l'installation de fermeture est réalisée sous la forme d'un moteur d'actionnement électrique ou d'un vérin d'actionnement hydraulique (17) et l'installation de réglage est en forme de moteur d'actionnement électrique (21).

12. Installation de réglage selon l'une quelconque des revendications,
caractérisée en ce que
le moteur d'actionnement (21, 47) coopère avec une installation de réglage électronique (49).

13. Installation de réglage selon l'une quelconque des revendications,
caractérisée en ce que
le levier d'actionnement (22) est monté de manière amovible sur le goujon (14) et en ce qu'après enlèvement du levier d'actionnement (22), une pièce de remplissage est montée sur le goujon (14).
